Europäisches Patentamt

European Patent Office

Office européen des brevets

(11) Publication number: **0 430 574 A2**

## (12) EUROPEAN PATENT APPLICATION

(21) Application number: **90312700.9**

(22) Date of filing: **21.11.90**

(51) Int. Cl.5: **C08F 220/02, C08F 265/00, C08F 299/00, C11D 3/37, C02F 1/56**

(30) Priority: **22.11.89 US 441121**

(43) Date of publication of application:
**05.06.91 Bulletin 91/23**

(84) Designated Contracting States:
**AT BE CH DE DK ES FR GB GR IT LI LU NL SE Bulletin**

(71) Applicant: **ROHM AND HAAS COMPANY**
**Independence Mall West**
**Philadelphia Pennsylvania 19105(US)**

(72) Inventor: **Hughes, Kathleen Anne**
**835 Cathcart Road**
**Blue Bell, Pennsylvania 19422(US)**
Inventor: **Swift, Graham**
**901 Cross Lane**
**Blue Bell, Pennsylvania 19422(US)**

(74) Representative: **Tanner, James Percival et al**
**ROHM AND HAAS (UK) LTD. European Operations Patent Department Lennig House 2 Mason's Avenue**
**Croydon, Surrey, CR9 3NB(GB)**

(54) Biodegradable, water-soluble polycarboxylic acid copolymers, compositions containing such copolymers, and methods of use of such copolymers.

(57) This invention is concerned with biodegradable water-soluble polycarboxylic acid copolymers having building, dispersing and threshold inhibiting properties, compositions containing such copolymers, and methods using such copolymers. It has been found that acid-functional monomers copolymerized to a low degree of polymerization with polyfunctional monomers yield compounds with good detergent performance and no loss of the biodegradability inherent in previously known low degree of polymerization polymers having poor detergent performance.

EP 0 430 574 A2

## BIODEGRADABLE, WATER-SOLUBLE POLYCARBOXYLIC ACID COPOLYMERS, COMPOSITIONS CONTAINING SUCH COPOLYMERS, AND METHODS OF USE OF SUCH COPOLYMERS

The present invention is concerned with biodegradable, water-soluble, detergent, dispersant, and/or water treatment copolymers. More specifically, this invention is concerned with acid-functional monomers which, when copolymerized to a low degree of polymerization with polyfunctional monomers, yield compounds with good detergent performance and no loss of the biodegradability inherent in previously known low degree of polymerization polymers having poor detergent performance.

In water treatment, but more particularly in detergent applications, large volumes of chemicals may enter the environment and eventually reside in subsurface waters or open bodies of surface water. Therefore, it is highly desirable that such chemicals biodegrade. It is well known that inorganic phosphorus compounds commonly used as builders in detergent compositions, while highly effective and relatively non-toxic, are nevertheless, frowned upon because of their ability to cause rapid plant growth and result in eutrophication of lakes. Efforts have thus been made in the detergent industry during the past three decades to convert from the eutrophying polyphosphates to more environmentally acceptable materials such as precipitant builders (e.g., sodium carbonate) and polycarboxylic acid polymers (e.g., polyacrylic acids). In a similar situation, the ubiquitous alkyl benzene sulfonates (ABS), probably the most popular detergent additives, were replaced by their biodegradable linear counterparts (LAS) to eliminate their build-up in surface and subsurface waters and the attendant foaming problems.

While the polycarboxylic acid polymers and copolymers currently used in detergents and water treatment applications do not suffer from the same drawbacks as the phosphorus-containing inorganic builders or the foam producing ABS surfactants, the past has taught that it is most desirable that chemicals used in large volume applications be biodegradable.

Unfortunately, most polycarboxylic acid polymers and copolymers, which are useful in detergent applications or as dispersants or as water treatment chemicals, are not highly biodegradable. Polymers with a low degree of polymerization (low "DP") tend to be more biodegradable, but unfortunately do not perform well as detergent additives or as water treatment chemicals. Polymers and copolymers with a high degree of polymerization perform well as detergent additives and the like, but tend to be highly non-biodegradable. This is true of the typical water treatment polymers in use today derived from the acrylic or methacrylic acids or the polymers or copolymers containing maleic, itaconic and similar monoethylenically unsaturated dicarboxylic acids.

Some effort has been made heretofore to provide biodegradable water-soluble polymers through the use of comonomers containing two ethylenically unsaturated double bonds. Notable in this regard is EP-A-0291808 (BASF Aktiengesellschaft). Studies of these polymers have revealed they are difficult to make.

Low DP (<10) polyacids biodegrade but do not enhance detergent performance. We have now discovered that low DP polymers and copolymers of acid-functional monomers can be combined or extended through a variety of linkages to yield copolymers that not only maintain the good biodegradability of the low DP polymers, but perform well as detergent additives and water treatment chemicals.

We have determined that these biodegradable copolymers can be synthesized by several routes including, but not limited to: the copolymerization of polyfunctional monomers and acid-functional monomers using aqueous free radical polymerization processes, more preferably a free radical polymerization process utilizing metal ions to control the molecular weight and the degree of polymerization of the polymer; and the use of in-process functionalization described in our EP-A-0324569 wherein low DP acid-functional addition polymers, which are prepared in the presence of polyols, are reacted either simultaneously or in a post polymerization reaction or a combination of both, with the polyols via, for example, an esterification reaction.

We have now unexpectedly found that acid-functional monomers, useful for making relatively non-biodegradable water-soluble polymers known in the prior art, can be utilized to form very low molecular weight polymers and copolymers which are combined and/or extended through a variety of polymer linkages to form higher molecular weight polymers that perform well as biodegradable detergent additives and the like.

According to the present invention there is provided a biodegradable, water-soluble copolymer which has a biological oxygen demand (BOD) of greater than 25% and which is represented by the following formula: $[(X)_m(Y)]_p$, wherein:

"X" is an addition or block polymer or copolymer segment having n recurring monomer units in a substantially linear chain, and comprising at least 3 carboxylic acid groups or salts thereof, and for each of said segments, n is a number averaging between 3 and 20;

m is the average number of X segments per Y segment and has a value of greater than 1 and up to 4;

"Y" is a crosslinker segment which comprises units derived from polyfunctional, for example polyvinyl, monomers and which has been prepared prior to or produced in situ with said polymer X and has from 2 to 4 conjugated or non-conjugated ethylenically unsaturated double bonds;

and p is the average number of crosslinking segments (Y) in a single molecule.

Y may, for example, be the segment derived from the reaction of polyols, whereby the polyols react either simultaneously or in a post polymerization reaction or a combination of both, with X via, for example, an esterification reaction.

Where more than one crosslinking segment attaches to a polymer or copolymer segment (X), p is greater than one. Thus, if p is one the molecule is X-Y-X where Y is a diethylenically unsaturated crosslinker, whereas the molecule X-Y-X-Y-X represents an instance where said polyvinyl crosslinker can combine with the X segments to form a larger molecule, for example where p = 3, and so on.

The X polymer segment comprises units derived from acid-functional ethylenically unsaturated monomers including those conventionally used for detergent, dispersant and water treatment applications, such as those shown in the aforesaid EP-A-0291808, but preferably acrylic acid, methacrylic acid, maleic acid, itaconic acid, crotonic acid, vinyl acetic acid, acryloxypropionic acid, related monomers, and combinations thereof. The acid-functional monomers comprise a predominant portion of the copolymers of the present invention, preferably 2 to 50 moles and even more preferably 3 to 10 moles, per equivalent of polyfunctional, for example polyvinyl, compound.

The Y crosslinker segment comprises units derived from ethylenically unsaturated monomers with multiple double bonds such as ethylene glycol diacrylate, dimethacrylate, dimaleate or diitaconate; trimethylolpropane triacrylate, trimethacrylate, trimaleate or triitaconate; pentaerythritol tetraacrylate, tetramethacrylate, tetramaleate or tetraitaconate; diacrylate, dimethacrylate, dimaleate or diitaconate esters of polyalkylene oxides, such as polyethylene oxide, polypropylene oxide, polybutylene oxide; block copolymers of alkylene oxides; or mixtures thereof. Other esters of the groups of polyhydric alcohols which are hydrolyzable are also suitable to react with the acid-functional monomers. The more preferable polyethylenically unsaturated polymers (crosslinkers) useful to combine with and/or extend the low DP acid-functional polymers or copolymers are copolymers of polyethylene glycols or other polyhydric alcohols, or the like, with a maleic anhydride or similar anhydride. Formation of such copolymers (macromers) are illustrated hereinafter in the specific examples and can be prepared, for example, using water-soluble chain transfer agents, such as mercaptans, bisulfites or hypophosphites, and water-soluble initiators such as persulfates, hydrogen peroxide or t-butyl hydroperoxide.

These polyethylenically unsaturated polymers serving as extending (crosslinking) groups are normally present in the copolymers of this invention in a minor amount, for example less than about 40 mole %, with the remainder of the copolymer being derived from one or more suitable acid-functional monomer and, optionally, other functional or non-functional monomers.

The copolymers of this invention can be prepared using a variety of polymerization techniques to control molecular weight, such as: free radical polymerization processes; the use of in-process functionalization as described in the above-mentioned EP-A-0324569, wherein low DP acid-functional addition polymers, which are prepared in the presence of polyols, are reacted either simultaneously or in a post polymerization reaction or a combination of both, with the polyols via, for example, an esterification reaction; and by way of an aqueous process utilizing metal salts.

The more preferred biodegradable, water-soluble copolymers of the present invention are those having low DP numbers for the acid-functional polymer chains, specifically those having DP numbers from about 3 to 20, more preferably from about 3 to 10. To achieve molecular weight control (or control of the length of the polymer chains), the more preferable method of preparing the copolymers of the present invention is to employ water-soluble metal salts at very low levels. Although the mechanism of the process set forth herein is not fully understood, it is believed that the metal salts act as polymerization moderators, that is they control the molecular weight, the chain length and the degree of branching. It is further believed the polymerization moderators lead to the formation of short, unbranched chains and therefore to a more biodegradable chain. This is analogous to the above-mentioned branched alkyl benzene sulfonates (ABS) that were replaced by their linear counterparts (LAS) to improve biodegradability. Even though a substantially linear copolymer is preferred for the copolymers of this invention, chains with a greater amount of branching which may not be as biodegradable, may be adequate for the uses described herein. The theory of this invention is presented here as a possible explanation to the surprising results obtained and in no way is intended to limit the scope of this invention.

When water-soluble metal salts, such as the salts of copper, iron, cobalt and manganese, are employed in the preparation of the copolymers of the invention, they are preferably employed at very low levels, for example, from about 1 to 200 parts per million (ppm) of the metal ion, based on the weight of the acid-functional, polymerizing monomers, and more preferably from about 5 to 100 ppm. The more preferred metal salts are the copper salts, which include all inorganic and organic compounds that will generate copper ions in aqueous solution. Among suitable copper salts are: copper sulfate, copper nitrate and copper chloride. Suitable organic copper compounds include: copper acetate and inert, water-soluble copper complexes. The copper salts may be used as a sole source of metal or in combination with other transition metal salts. The amount of metal ion present during the reaction is important to the polymerization process. If the level of metal ion is too high, the percent monomer conversion decreases to an unacceptably low level, and if the level of metal ion is too low, the effect of molecular weight control as described above is diminished.

The polymerization reaction between the polyethylenically unsaturated extender and the acid-functional monomers/monomer units is suitably conducted in the presence of a water-soluble initiator. The water-soluble initiators which may be used are the well know peroxy, persulfate and azo initiators including hydrogen peroxide, t-butyl hydroperoxide, sodium persulfate, potassium persulfate, ammonium persulfate, sodium perphosphate, ammonium perphosphate, potassium perphosphate and 2,2-azobis (cyanovaleric acid). Hydrogen peroxide is a highly preferred initiator among those listed above. The initiator concentration is normally between 0.5% and 20% by weight, based on the total weight of the monomers, and preferably from 1 to 10%.

The polymerization reaction with the polyethylenically unsaturated extending polymers (crosslinkers) and the acid-functional monomers/monomer units is conducted at about 20 to 80% solids, and most preferably from about 30 to 65% solids. Polymerization temperatures are from about 80 to 150°C, preferably from 90 to 120°C.

The polymerization can be run using a batch process or a continuous process. When running the batch mode, monomer addition rates are from 1 to 10 hours, preferably 1 to 4 hours and when running a continuous process, residence times of at least 30 minutes should be used. If residual monomer levels are higher than desired a post polymerization addition of initiator (chaser catalyst) or initiator and monomer scavenger may be used.

It is customary to add an in-process neutralization solution of from 20 to 80 equivalent % of base, preferably 40 to 60%, based on the acid content of the monomer mixture. Preferably, the neutralization solution is added to the reactor linearly throughout the polymerization. Suitable bases include sodium hydroxide, potassium hydroxide and ammonium hydroxide. The pH of the reaction solution should be maintained in the range of from about 3 to 7 and most preferably from about 4 to 6.

The above copolymers may, for example, be used as detergent and cleaning agent additives, as dispersants, or as water treatment chemicals. They can be added to powder or liquid formulations.

Detergent and cleaning agents contain an inert carrier or diluent and are usually based on surfactants and, optionally, on either precipitant or sequestrant builders. In liquid detergents, the use of builders is normally omitted.

Liquid detergents usually contain, as components, liquid or even solid surfactants that are soluble or at least dispersible in the detergent formulation. Surfactants suitable for this purpose include the products that can also be used in powdered detergents and, furthermore, liquid polyalkylene oxides or polyalkoxylated compounds.

Suitable surfactants include suitable anionic surfactants and nonionic surfactants. Anionic surfactants include $C_8$ to $C_{12}$ alkylbenzenesulfonates, $C_{12}$ to $C_{16}$ alkane sulfonates, $C_{12}$ to $C_{16}$ alkylsulfates, $C_{12}$ to $C_{16}$ alkylsulfosuccinates and $C_{12}$ to $C_{16}$ sulfated ethoxylated alkanols. Suitable nonionic surfactants include $C_6$ to $C_{12}$ alkylphenol ethoxylates, $C_{12}$ to $C_{20}$ alkanol alkoxylates, and block copolymers of ethylene oxide and propylene oxide. Optionally, the end groups of polyalkylene oxides can be blocked. This means the free OH groups of the polyalkylene oxides can be etherified, esterified, acetalized and/or aminated. Another modification consists of reacting the free OH groups of the polyalkylene oxides with isocyanates.

Suitable nonionic surfactants also include $C_4$ to $C_{18}$ alkyl glucosides as well as the alkoxylated products obtainable therefrom by alkoxylation, particularly those obtainable by reaction of alkyl glucosides with ethylene oxide.

The surfactants, usable in detergents, can also have an amphoteric character and they can be soaps.

In general, the surfactants constitute from 2 to 50, preferably 5 to 45, wt % of the detergent and cleaning agent.

Sequestrant builders which may be present in detergents and cleaning agents are, for example, phosphates, orthophosphates, pyrophosphates and especially sodium tripolyphosphate. Of lesser importance are the zeolites, sodium carbonate, polycarboxylic acids, nitrilotriacetic acid, citric acid, tartaric acid, the salts of the aforesaid acids and the monomeric, oligomeric or polymeric phosphonates. Varying amounts of the individual substances may be used in the preparation of detergent formulations. For example, sodium carbonate is used in an amount of up to 80%, phosphates up to 45%, zeolites up to 40%, nitrilotriacetic acid and phosphonates up to 10%, and polycarboxylic acids in an amount of up to 30%, by weight based on the total detergent formulation. Because of the severe environmental pollution caused by the use of phosphates, the phosphate content of detergents and cleaning agents is increasingly being reduced so that detergents currently contain up to 25% of phosphates or preferably are phosphate-free.

Detergent formulations optionally contain corrosion inhibitors, such as silicates as additional additives. Suitable silicates are, for example, sodium silicate, sodium disilicate and sodium metasilicate. The corrosion inhibitors can constitute up to 25 wt % of the detergent and cleaning agent formulation. Other common additives to detergent and cleaning agent formulations are bleaching agents used in an amount of up to 30 wt % of the weight of the formulation. Suitable bleaching agents are, for example, perborates or chlorine-generating substances, such as chloroisocyanurates. Another group of additives that can be used in detergents are graying inhibitors. Known substances of this type are carboxymethylcellulose, methylcellulose, hydroxypropylmethylcellulose and graft copolymers of vinyl acetate and polyalkylene oxides having a molecular weight of 1000 to 15,000. Graying inhibitors are used in the detergent formulations in an amount of up to 5 wt % of the weight of the formulation. Other common detergent additives that can optionally be used are optical brighteners, enzymes and perfumes.

Powdered detergent formulations may, for example, contain up to 50 wt % of the carrier or diluent, for example, sodium sulfate, sodium chloride or sodium borate. The powdered detergent formulations can be anhydrous or they can contain small amounts, for example up to 10 wt %, of water. Liquid detergents usually contain up to 80 wt % of water as carrier or diluent.

The afore-described biodegradable copolymers can be added to all detergent and cleaning agent formulations. To this end, they are used in amounts of from 0.5 to 50%, for example, 5 to 50%, preferably between 0.5 and 30%, and more preferably between 1 and 15 wt %, based on the total formulation. In most cases, particularly when used as soil redeposition inhibitors, the actually used amounts of biodegradable copolymers are preferably between 2 and 10 wt %, based on the detergent and cleaning agent mixture. Of particular importance is the use of the additives according to the invention in phosphate-free and low-phosphate detergents and cleaning agents. The low-phosphate formulations contain up to a maximum of 25 wt % of sodium tripolyphosphate or pyrophosphate. In view of their biodegradability, the copolymers according to the invention are preferably used in phosphate-free formulations and serve as builders in place of the phosphates.

If desired, the biodegradable copolymers according to the invention can be used in detergent formulations together with non-biodegradable copolymers of acrylic acid and maleic acid or with acrylic acid homopolymers. The last-mentioned non-biodegradable polymers are currently being used as soil redeposition inhibitors in detergent formulations. In addition to the afore-mentioned polymers, the copolymers of $C_3$ to $C_6$ monocarboxylic and dicarboxylic acid or maleic anhydride and $C_1$ to $C_4$ alkyl vinyl ethers are also suitable as soil redeposition inhibitors. The molecular weight of the homopolymers and copolymers is 1000 to 100,000. If desired, these soil redeposition inhibitors can be used in detergents, together with the biodegradable copolymers of the invention, in an amount of up to 20 wt % based on the total formulation. Although the known soil redeposition inhibitors, based on the said polymers, are not biodegradable, in water treatment plants they can be removed from waste water together with the activated sludge on which they are adsorbed. The biodegradable copolymers can be added to detergent formulations in the free acid form or in completely or partly neutralized form.

Other applications for the copolymers of this invention include dispersing applications, for example in aqueous systems such as in aqueous clay dispersions for paper making, and as anti-nucleating agents in water treatment where minor amounts of the copolymers can serve as threshold inhibitors for crystal formation or scaling in cooling towers or boilers. When used to inhibit crystal formation or scaling, the water-soluble copolymers are often combined with corrosion inhibitors such as inorganic or organic phosphates or phosphonates or metallic salts such as zinc compounds and the like. For example, dispersant and water treatment compositions may comprise the copolymer of the present invention and an inert carrier or diluent, for example, water. In such compositions, the copolymer is preferably present in an amount of from 20 to 60% by wt based on the total weight of the composition.

The following examples are presented to illustrate preferred embodiments of the present invention.

Example 1 - Dimaleate Copolymers

Preparation of PEG 400 dimaleate comonomer (chain extender or crosslinker)

5

To a 1 liter flask, equipped with mechanical stirrer, thermometer and condenser was added 324 grams polyethylene glycol 400, 159 grams maleic anhydride and 9.6 grams of para-toluene sulfonic acid (2% by wt on total charged). The flask charges were heated to 95° C and held until, as determined by titration, the titrate was 50% of theory.

Various other polyethylene glycol polymers and polyhydric alcohols may be reacted with the various monoethylenically unsaturated anhydrides, such as maleic anhydride, itaconic anhydride and citraconic anhydride by the above general process to produce suitable macromers (comonomers) for use in this invention. Other polyhydric alcohols include glycerol, pentaerythritol, monosaccharides and sugar acids.

## Example 2

To a 2 liter, 4 neck flask, equipped with a mechanical stirrer, condenser, thermometer, and inlets for the additions of monomer, initiator and neutralizer, were added 224 grams of deionized water and 11.8 grams of 0.15% by wt copper sulfate pentahydrate solution. The flask contents were heated to reflux. Then a monomer solution of 152 grams of polyethylene glycol 400 /dimaleate solution from Example 1 and 180.2 grams of glacial acrylic acid, an initiator solution of 76.4 grams of 30% by wt hydrogen peroxide and 12.8 grams of deionized water and a neutralizer solution of 120 grams of 50% by wt sodium hydroxide (50 eq% neutralized) and 88 grams deionized water, were added linearly and separately over two hours while maintaining reflux. When the feeds were completed, reflux was continued for an additional 30 minutes.

The resultant polymer solution had a solids content of 42.5% by wt and a pH of 4.7. The molecular weight, based on gel permeation chromatography (GPC), was: Mw = 3220 and Mn = 1800.

## Example 3

To a 2 liter, 4 neck flask equipped with a mechanical stirrer, condenser, thermometer, and inlets for the addition of monomer, initiator and neutralizer, were added 192 grams of deionized water and 5.9 grams of 0.15% by wt copper sulfate pentahydrate solution. The flask contents were heated to reflux. Then a monomer solution of 152 grams of polyethylene glycol 400/dimaleate solution from Example 1 and 90.1 grams of glacial acrylic acid, an initiator solution of 46.4 grams of 30% by wt hydrogen peroxide, and a neutralizer solution of 96 grams of 50% by wt sodium hydroxide (50 eq% neutralized) and 57 grams deionized water, were added linearly and separately over two hours while maintaining reflux. When the feeds were completed, reflux was continued for 30 minutes.

## Biodegradation Testing

The biodegradabilities of some of the above-described graft copolymers are listed in Table II below. Polymer biodegradabilities were measured on a scale of 0 to 100% based on BOD (biological oxygen demand) testing. The BOD procedure is the method in Standard Methods for Examination of Water & Wastewater, page 525,16th edition (1985). The BOD test used was a closed bottle test whereby a solution of the candidate polymers and mineral salts was inoculated with municipal sewage bacteria. Biodegradation was indicated by oxygen uptake, which was determined by measuring the dissolved oxygen content of the solution. BOD test results provided in Table II are for 5 mg/300 ml concentrations and are for the durations listed.

## Detergent Formulation and Performance Evaluation

A 10.16cm x 10.16cm (4" x 4") white cotton swatch was soiled with approximately 1 gram of a 50% by wt slurry (in water) of Skippack clay. The soil, covering a 5.08cm (2") diameter circle centered on the swatch, is allowed to air dry overnight. Clean fabric (for redeposition test) was a 10.16cm x 10.16cm (4"x4") white cotton swatch which was unsoiled.

The detergent compositions were tested in a Terg-o-Tometer at the following conditions; 40° C, 100 rpm, 100 ppm hardness (50% by wt city tap water/50% by wt de-ionized water), 12 minute wash with one 3 minute rinse, 1300 ppm detergent and 5 cloths per pot (3 of them soiled). The wash water was pre-heated, the fabric swatches were added and then dissolved detergent (2.6 grams of a 50% by wt slurry in 100 mls water) was added. Following the wash period the swatches were wrung, and following the rinse cycle the swatches were wrung again and then air dried. Swatches washed in a detergent containing polyacrylic acid homopolymer were always run as a control.

Reflectance was measured a Pacific Scientific Colorimeter (Colorgard system 1000) and the data recorded using the L,a,b color scale. Detergency values (E) and whiteness index (W.I.) are calculated as:

$$E = \sqrt{(Ls-L)^2 + (as-a)^2 + (bs-b)^2}$$

$$W.I. = L/100(L-(5.715xb))$$

where Ls, as, and bs are the reflectivity reading for the soiled swatches and L,a,b are the reflectivity readings for the washed swatches.

Each polymer was evaluated in three separate washing experiments and the results compared to the control of polyacrylic acid homopolymer. The detergent composition shown in Table I was for the above described performance evaluation and the results of the detergent performance evaluation are listed in Table II along with the biodegradation data. Additional detergent formulations representative of, but not limited to, possible formulations that the polymers of this invention may be used in are shown in Tables III and IV; the figures quoted being percentages by weight, based on the total composition.

Table I

| Detergent Composition Used to Evaluate the Polymers of this Invention | |
|---|---|
| Detergent Component | Amount, % by wt |
| sodium carbonate | 22.0 |
| zeolite A | 16.0 |
| sodium silicate | 2.7 |
| LAS | 8.3 |
| lauryl sulfate | 8.3 |
| sodium sulfate | 34.0 |
| polymer | 1.7 |
| water | 7.0 |

Table II

| Biodegradation, Clay Soil Removal and Redeposition Test Data | | | | |
|---|---|---|---|---|
| EXAMPLE | BIODEGRATION | | DETERGENCY, E | REDEPOSITION, W.I. |
| | BOD, % | Days, No. | | |
| no polymer | --- | -- | 29.1 | 55.2 |
| 1 | 36.6 | 47 | --- | --- |
| 2 | 36.7 | 47 | 30.5 | 62.7 |
| 3 | --- | -- | 32.9 | 63.5 |

Table III

| Liquid Compositions | | | | | |
|---|---|---|---|---|---|
| | Unbuilt | Citrate | Citrate/Fatty Acid Soap | Phosphate | Non-Phosphate |
| LAS | 3.5 | 15 | 8 | 7 | 19 |
| Alcohol Ether Sulfate | - | - | 16 | - | - |
| Citrate | - | 10 | 6 | - | - |
| Fatty Acid Soap | - | - | 10 | - | - |
| Nonionic Surfactant | 16 | 7.5 | 6 | 3 | 15 |
| Propylene Glycol | - | - | 8 | - | 4 |
| Ethanol | 5 | - | 4 | - | 8.5 |
| Na Xylene Sulfonate | - | 5.5 | - | - | - |
| Opt Brightener | 0.2 | 0.2 | 0.15 | 0.1 | 0.25 |
| Enzyme | 0.7 | - | 0.5 | 0.5 | 0.75 |
| Water | QS* | QS* | QS* | QS* | QS* |
| Borax | - | - | - | 3 | - |
| Tripolyphosphate | - | - | - | 23 | - |
| Glycerin | - | - | - | 6 | - |

* QS = Composition made up to 100% with water

Table IV

| Powder Compositions | | | | |
|---|---|---|---|---|
| | TPP[b] | PYRO[c] | Phosphate | Non-Phosphate |
| Anionic | | | | |
| LAS[f] | 5 | 5 | 6 | 7.5 |
| Lauryl Sulfate | 8 | 13 | - | - |
| Alcohol Ether Sulfate | 3 | - | - | - |
| PEO[a] Alcohol | 1.5 | 2 | - | - |
| TPP[b] | 38 | - | 30 | - |
| Sodium Carbonate | 10 | 13 | 7 | 7.5 |
| Sodium Sulfate | 15 | 24 | 15 | 20 |
| Sodium Silicate | 6 | 5 | 5 | 1.5 |
| Zeolite A | - | - | - | 25 |
| Opt Brighener | 0.2 | 0.2 | 0.2 | 0.2 |
| Enzyme | 0.5 | 0.5 | 0.3 | 0.3 |
| NaPAA[d] | - | 0.7 | - | - |
| Soap | - | - | 1 | - |
| Nonionic (EO/PO) | - | - | 5 | 5 |
| Perborate | - | - | 20 | 22.5 |
| TAED[e] | - | - | 4 | - |
| Anti-Redep Agents | - | - | 0.2 | 0.2 |
| Water | - | - | 0.5 | 0.3 |
| Sodium Pyrophosphate | - | 30 | - | - |

(a) = polyethoxylate
(b) = Sodium Tripolyphosphate
(c) = Sodium pyrophosphate
(d) = Sodium salt of polyacrylic acid
(e) = tetraacetyl ethylene diamine
(f) = Linear alkyl sulonfates

## Claims

1) A biodegradable, water-soluble polycarboxylic acid copolymer, having building, dispersing and threshold inhibiting properties, represented by the formula:

$[(X)_m(M]_p$

wherein:

X is an addition or block polymer or copolymer segment having n recurring monomer units in a substantially linear chain, and comprising at least 3 carboxylic acid groups or salts thereof, and for each of said units n is a number averaging between 3 and 20; m is the average number of X segments per Y segment and has a value of greater than 1 and up to 4; Y is a segment which comprises units derived from polyfunctional monomers having from 2 to 4 conjugated or non-conjugated ethylenically unsaturated double bonds; and p is the average number of Y segments per molecule;

and wherein said copolymer has a biological oxygen demand (BOD) value of greater than 25%.

2) A copolymer as claimed in claim 1, wherein the X polymer segment comprises units of mono- and/or dicarboxylic acid monomer selected from acrylic acid, methacrylic acid, maleic acid, itaconic acid, crotonic acid, vinyl acetic acid, acryloxypropionic acid, or mixtures thereof.

3) A copolymer as claimed in claim 1 or claim 2, wherein the Y polymer segment comprises units selected from at least one of ethylene glycol diacrylate, dimethacrylate, dimaleate or diitaconate; trimethylolpropane triacrylate, trimethacrylate, trimaleate, or triitaconate; pentaerythritol tetraacrylate, tetramethacrylate, tetramaleate or tetraitaconate; diacrylate, dimethacrylate, dimaleate or diitaconate esters of polyalkylene oxides, such as polyethylene oxide, polypropylene oxide, polybutylene oxide, and block copolymers of the

9

alkylene oxides; or mixtures thereof.

4) A copolymer as claimed in any preceding claim, wherein the X polymer segment comprises 2 to 50 moles per equivalent of the Y segment.

5) A copolymer as claimed in any preceding claim, wherein:

i) the X polymer segment is a poly(meth)acrylate polymer chain, or a poly(meth)acrylate/maleate polymer chain; and/or

ii) the Y polymer segment is a dimethacrylate ester of an ethylene glycol or a polyalkylene oxide.

6) A composition, for example, a detergent, cleaning, dispersing or water treatment composition, which comprises:

a) a copolymer as claimed in any of claims 1 to 5; and

b) an inert carrier or diluent.

7) A composition as claimed in claim 6 which is in the form of a detergent or cleaning composition and in which the copolymer (a) is present in an amount sufficient to serve as a detergent builder or anti-incrustation agent.

8) A detergent or cleaning composition as claimed in claim 7, wherein:

i) the copolymer (a) serves as a detergent builder and is present in an amount of 5 to 50% by weight of the composition, or

ii) the copolymer (a) serves as an anti-incrustation agent and is present in an amount of between 1% and 10% by weight of the composition.

9) A composition as claimed in claim 6 which is in the form of a dispersant or water-treatment composition.

10) A method of cleaning an article which comprises contacting the article with a copolymer as claimed in any of claims 1 to 5, or a detergent or cleaning composition as claimed in any of claims 6 to 8.

11) A method of dispersing matter, for example in an aqueous system, which comprises contacting the matter with a copolymer as claimed in any of claims 1 to 5, or a dispersing composition as claimed in claim 6 or claim 9.

12) A method of treating aqueous systems, which comprises contacting the aqueous system with a copolymer as claimed in any of claims 1 to 5, or a water treatment composition as claimed in claim 6 or claim 9.

13) A process for making a copolymer as claimed in any of claims 1 to 5, which comprises:

a) polymerizing a monomer charge comprising monomers selected from monocarboxylic acids and dicarboxylic acids; and

b) reacting with said monomers, either simultaneously or subsequent to their polymerization, a segment comprising units derived from polyfunctional monomers having from 2 to 4 conjugated or non-conjugated ethylenically unsaturated double bonds.

14) A process as claimed in claim 13, wherein step a) is conducted in the presence of a water-soluble metal salt, for example, a salt of copper, iron, cobalt or manganese.

15) A process as claimed in claim 14, wherein the metal salt is present in an amount of 1 to 200 parts per million, based on the weight of the monomer charge.